(19) Europäisches Patentamt
European Patent Office
Office européen des brevets

(11) EP 4 318 105 A1

(12) **EUROPEAN PATENT APPLICATION**
published in accordance with Art. 153(4) EPC

(43) Date of publication:
**07.02.2024 Bulletin 2024/06**

(21) Application number: **22781232.8**

(22) Date of filing: **31.03.2022**

(51) International Patent Classification (IPC):
***G02C 7/10*** *(2006.01)* ***G02B 1/10*** *(2015.01)*
***G02B 5/22*** *(2006.01)* ***G02C 7/02*** *(2006.01)*

(52) Cooperative Patent Classification (CPC):
**G02B 1/10; G02B 5/22; G02C 7/02; G02C 7/10**

(86) International application number:
**PCT/JP2022/016499**

(87) International publication number:
**WO 2022/211022 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2021 JP 2021061645**

(71) Applicant: **Hoya Lens Thailand Ltd.**
**Pathumthani 12130 (TH)**

(72) Inventors:
- **NOZAWA, Kichinosuke**
  **Tokyo 160-8347 (JP)**
- **SAKATA, Shusaku**
  **Tokyo 160-8347 (JP)**

(74) Representative: **Kraus & Lederer Patentanwälte PartGmbB**
**Thomas-Wimmer-Ring 15**
**80539 München (DE)**

# (54) COLORED SPECTACLE LENS

(57) A colored spectacle lens comprising:
a substrate (X) containing a colorant; a water-absorbent antifogging layer (Z) present on at least one surface side of the substrate (X); and
an intermediate layer (Y) between the substrate (X) and the water-absorbent antifogging layer (Z).

EP 4 318 105 A1

## Description

### Technical Field

The present disclosure relates to a colored spectacle lens.

### Background Art

A technique for forming an antifogging layer on the surface of a lens substrate for preventing fogging (antifogging) of a spectacle lens is conventionally known.
For example, a technique for coating the surface of a lens substrate with a surfactant is known.
In addition, a technique for forming a water-absorbent resin layer and a water-repellent layer on the surface described in the lens is also known. For example, Patent Literature 1 discloses an antifogging optical article in which a water absorbing layer containing a urethane or acrylic resin having a specific polyoxyethylene chain as a main component is formed on the surface of a glass or plastic substrate, and a water-repellent layer containing at least one of an amino-modified silicone or a mercapto-modified silicone as a main component is formed on the surface of the water absorbing layer.

### Citation List

### Patent Literature

Patent Literature 1: WO 2013/005710 A

### Summary of Invention

### Technical Problem

In a spectacle lens in which an antifogging layer containing a surfactant is formed on the surface of a lens substrate, the surfactant is easily peeled off from the lens surface when the surfactant is wiped with water. Therefore, the durability of the antifogging layer is not sufficient and antifogging performance is also not sufficient.
Moreover, the water-absorbent antifogging layer described in Patent Literature 1 is excellent in antifogging properties and antifogging durability as compared with an antifogging layer containing a surfactant. However, when the water-absorbent antifogging layer is formed on a colored substrate, there is a problem that a colorant migrates from the substrate to the water-absorbent antifogging layer, and then the colorant is separated from the spectacle lens, leading to decolorization of the spectacle lens.
An object of an embodiment of the present disclosure is to suppress the colorant migrating from the substrate to the water-absorbent antifogging layer and suppress the migrated colorant from being separated from the colored spectacle lens. That is, it is an object to suppress decolorization of a colored spectacle lens.

### Solution to Problem

The embodiment of the present disclosure relates to the following [1] to [9].

[1] A colored spectacle lens including:

a substrate (X) containing a colorant; a water-absorbent antifogging layer (Z) present on at least one surface side of the substrate (X); and
an intermediate layer (Y) between the substrate (X) and the water-absorbent antifogging layer (Z).

[2] The spectacle lens according to [1], wherein a difference (IY - IZ) between an indentation hardness IY of the intermediate layer (Y) at a load of 100 mgf and an indentation hardness IZ of the water-absorbent antifogging layer (Z) at a load of 100 mgf is more than 0 mgf/$\mu m^2$.
[3] The spectacle lens according to [1] or [2], wherein a ratio (IY/IZ) of the indentation hardness IY to the indentation hardness IZ is 1.1 or more.
[4] The colored spectacle lens according to any one of [1] to [3], wherein the substrate (X) and the intermediate layer (Y) are in direct contact with each other.
[5] The colored spectacle lens according to any one of [1] to [4], wherein the intermediate layer (Y) and the water-absorbent antifogging layer (Z) are in direct contact with each other.
[6] The colored spectacle lens according to any one of [1] to [5], wherein an optical film thickness of the intermediate layer (Y) in light having a wavelength of 450 to 650 nm is 0.2 λ to 0.3 λ.
[7] The colored spectacle lens according to any one of [1] to [6], wherein the intermediate layer (Y) is a cured product of a composition containing a thermosetting resin.
[8] The colored spectacle lens according to any one of [1] to [7], wherein the water-absorbent antifogging layer (Z) is a cured product of an antifogging layer composition containing the following components (A) to (D):

Component (A): a (meth)acrylic resin having a constituent unit derived from a monomer (a-1) represented by the following general formula (1), a constituent unit derived from a monomer (a-2) represented by the following general formula (2), a constituent unit derived from a hydroxyalkyl (meth)acrylate (a-3), and a constituent unit derived from a monomer (a-4) represented by the following general formula (3);
Component (B): a polyol compound (B); and
Component (C): a polyfunctional isocyanate compound (C),

[Chemical Formula 1]

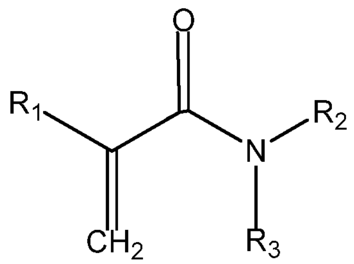

(1)

wherein $R_1$ is a hydrogen atom or a methyl group, and $R_2$ and $R_3$ are each independently a hydrogen atom or a linear or branched alkyl group having 1 to 3 carbon atoms,

[Chemical Formula 2]

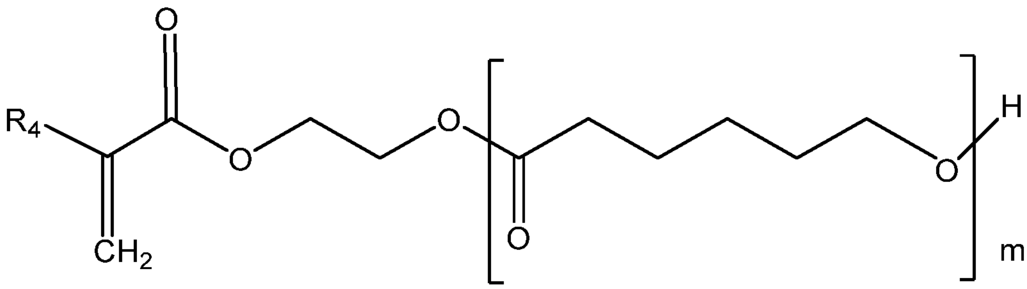

(2)

wherein $R_4$ is a hydrogen atom or a methyl group, and m is an integer of 1 to 5, and

[Chemical Formula 3]

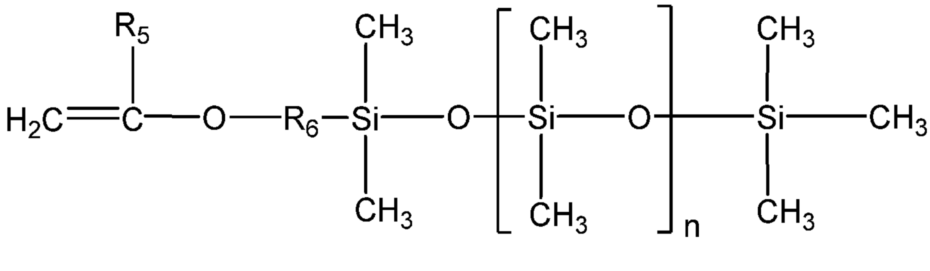

(3)

wherein $R_5$ is a hydrogen atom or a methyl group, $R_6$ is a divalent organic group, and n is 0 or an integer of 1

or more.

[9] The spectacle lens according to any one of [1] to [8], wherein the water-absorbent antifogging layer (Z) is an outermost layer.

Advantageous Effects of Invention

According to an embodiment of the present disclosure, it is possible to provide a spectacle lens in which migration of a colorant from a substrate to a water-absorbent antifogging layer is suppressed, and separation of the colorant from the colored spectacle lens is suppressed. That is, it is possible to provide a colored spectacle lens having a water-absorbent antifogging layer in which decolorization is suppressed.

Brief Description of Drawings

Fig. 1 shows a measurement result of spectral reflectance of a colored spectacle lens of Example 1.
Fig. 2 shows a measurement result of spectral reflectance of a colored spectacle lens of Comparative Example 1.

Description of Embodiments

Hereinafter, embodiments and examples of the present disclosure will be described. The same or corresponding parts are denoted by the same reference numerals, and the description thereof may not be repeated. In the embodiments and examples described below, when referring to the number, amount, and the like, the scope of the present disclosure is not necessarily limited to the number, amount, and the like unless otherwise specified. In the following embodiments, each component is not necessarily essential to the embodiments and examples of the present disclosure unless otherwise specified.
In the notation of the group (atomic group) in the present specification, the notation that does not indicate whether it is substituted or unsubstituted includes both groups having no substituent and groups having a substituent. For example, the "alkyl group" includes an alkyl group having no substituent (unsubstituted alkyl group) and an alkyl group having a substituent (substituted alkyl group).
The notation "(meth)acryl" in the present specification represents a concept including both acryl and methacryl. The same applies to similar notations such as "(meth)acrylate".
In the present specification, the constituent unit derived from the monomer (a-1) may be referred to as a "constituent unit (a-1)", the constituent unit derived from the monomer (a-2) as a "constituent unit (a-2)", the constituent unit derived from the monomer (a-3) as a "constituent unit (a-3)", and the constituent unit derived from the monomer (a-4) as a "constituent unit (a-4)".
The "solid content" in the composition means the content of components other than a solvent.
The "carbon number" for a group having a substituent means the number of carbon atoms in a portion excluding the substituent.

[Spectacle lens]

A spectacle lens according to an embodiment of the present disclosure includes a substrate (X) containing a colorant, and a water-absorbent antifogging layer (Z) present on at least one surface side of the substrate (X). The spectacle lens according to an embodiment of the present disclosure includes an intermediate layer (Y) between the substrate (X) and the water-absorbent antifogging layer (Z).
In general, the water-absorbent antifogging layer needs to absorb moisture, and therefore has a space for absorbing moisture. Therefore, the water-absorbent antifogging layer has a high degree of freedom of space and a relatively low film hardness. When the intermediate layer (Y) is not present between the substrate (X) and the water-absorbent antifogging layer (Z), the colorant contained in the substrate (X) migrates to the water-absorbent antifogging layer (Z) having a higher degree of freedom and a lower film hardness. Further, the colorant is separated from the colored spectacle lens, so that the colored spectacle lens is decolorized.
The spectacle lens according to an embodiment of the present disclosure includes the intermediate layer (Y) between the substrate (X) and the water-absorbent antifogging layer (Z). Such a configuration suppresses the colorant contained in the substrate (X) from migrating to the water-absorbent antifogging layer (Z). That is, decolorization of the colored spectacle lens is suppressed.
In the present disclosure, the water-absorbent antifogging layer (Z) may be simply referred to as an antifogging

layer (Z).

<Substrate (X)>

The substrate (X) according to an embodiment of the present disclosure contains a colorant.

The colorant is not particularly limited, and examples thereof include hydrophobic dyes such as disperse dyes and oil-soluble dyes; water-soluble dyes such as reactive dyes, acidic dyes, and direct dyes; photochromic dyes; deflection dyes; inorganic pigments such as carbon black, metal oxides, metal sulfides, and metal chlorides; organic pigments such as azo pigments, diazo pigments, phthalocyanine pigments, quinacridone pigments, isoindolinone pigments, dioxazine pigments, perylene pigments, perinone pigments, thioindigo pigments, anthraquinone pigments, and quinophthalone pigments; and dichroic pigments. Among them, a substrate (X) containing a disperse dye is further inhibited from decoloring.

As the substrate (X), a resin made of various types of raw materials can be used.

Examples of the resin constituting the substrate (X) include a polycarbonate resin, a urethane urea resin, a (thio)urethane resin, a polysulfide resin, a polyamide resin, a polyester resin, an acrylic allyl resin, and an allyl carbonate resin. The (thio)urethane resin means at least one selected from a thiourethane resin and a urethane resin. Among them, a (thio)urethane resin and a polysulfide resin are preferable.

In addition, the substrate (X) used for the spectacle lens of the present embodiment is preferably a plastic substrate having a refractive index of 1.50 or more, and more preferably a plastic lens substrate having a refractive index of 1.60 or more.

Preferable commercially available products of the plastic substrate include an allyl carbonate-based plastic lens "HILUX 1.50" (manufactured by HOYA Corporation, refractive index 1.50), a thiourethane-based plastic lens "MERIA" (manufactured by HOYA Corporation, refractive index 1.60), a thiourethane-based plastic lens "EYAS" (manufactured by HOYA Corporation, refractive index 1.60), a thiourethane-based plastic lens "EYNOA" (manufactured by HOYA Corporation, refractive index 1.67), a polysulfide-based plastic lens "EYRY" (manufactured by HOYA Corporation, refractive index 1.70), and a polysulfide-based plastic lens "EYVIA" (manufactured by HOYA Corporation, refractive index 1.74).

The thickness and the outer diameter of the substrate (X) are not particularly limited, but the thickness is usually about 0.5 to 30 mm, for example, 1 to 30 mm, and the outer diameter is usually about 50 to 100 mm.

The substrate (X) may be either a finish lens or a semi-finish lens.

The surface shape of the substrate (X) is not particularly limited, and may be any of a flat surface, a convex surface, a concave surface, or the like.

The spectacle lens of the present disclosure may be any of a single focal lens, a multifocal lens, a progressive addition lens, or the like. In a progressive addition lens, usually, a near vision region (near portion) and a progressive region (intermediate region) are included in a lower region described above, a distance vision region (distance portion) is included in an upper region.

<Intermediate layer (Y)>

The intermediate layer (Y) is a layer existing between the substrate (X) and the antifogging layer (Z).

The intermediate layer (Y) may or may not be in direct contact with the substrate (X), but is preferably in direct contact from the viewpoint of further suppressing decolorization.

The intermediate layer (Y) may or may not be in direct contact with the antifogging layer (Z), but is preferably in direct contact from the viewpoint of further suppressing decolorization.

In the intermediate layer (Y), the indentation hardness IY at a load of 100 mgf is preferably 13.3 mgf/pm$^2$ or more, more preferably 14.0 mgf/pm$^2$ or more, still more preferably 14.5 mgf/pm$^2$ or more, and still even more preferably 15.0 mgf/pm$^2$ or more from the viewpoint of suppressing decolorization.

In the present disclosure, the "indentation hardness" is a value measured with a nanoindenter device in accordance with the international standard ISO 14577. The "indentation hardness" means a measured value for at least one surface of the intermediate layer (Y).

From the viewpoint of further suppressing decolorization, the intermediate layer (Y) preferably has a film hardness higher than that of the antifogging layer (Z), and the difference (IY - IZ) between the indentation hardness IY of the intermediate layer (Y) at a load of 100 mgf and the indentation hardness IZ of the antifogging layer (Z) at a load of 100 mgf is more preferably more than 0 mgf/$\mu$m$^2$, still more preferably 1.0 mgf/pm$^2$ or more, and still even more preferably 2.0 mgf/pm$^2$ or more.

In addition, the ratio (IY/IZ) of the indentation hardness IY of the intermediate layer (Y) at a load of 100 mgf to the indentation hardness IZ of the antifogging layer (Z) at a load of 100 mgf is preferably 1.05 or more, more preferably 1.10 times or more, still more preferably 1.15 times or more, and still even more preferably 1.20 times or more.

The thickness of the intermediate layer (Y) is preferably 50 nm or more, more preferably 60 nm or more from the viewpoint of further suppressing decolorization, and is preferably 6 um or less, more preferably 5 um or less from the viewpoint of ease of production and cost.

The intermediate layer (Y) is preferably a cured product of a composition containing a thermosetting resin from the viewpoint of further suppressing decolorization. Such a cured product can further suppress migration of the colorant from the substrate (X) to the antifogging layer (Z) .

The intermediate layer (Y) is not particularly limited, but is preferably at least one selected from intermediate layers (Y-1) to (Y-3).

[Intermediate layer (Y-1)]

The intermediate layer (Y-1) is a layer having an optical film thickness of 0.2 λ to 0.3 λ in light having a wavelength λ of 450 to 650 nm. That is, the optical film thickness of the intermediate layer (Y-1) is 0.2 λ to 0.3 λ over light having a wavelength of 450 to 650 nm. When the intermediate layer (Y-1) has such an optical film thickness, not only the colorant can be prevented from migrating from the substrate (X) to the antifogging layer (Z), and the migrated colorant can be prevented from being separated from the spectacle lens, but also the interference fringes generated in the spectacle lens can be suppressed.

The intermediate layer (Y-1) may be an intermediate layer (Y-1-1) obtained by applying an aqueous resin composition containing a resin and an aqueous solvent, or may be an intermediate layer (Y-1-2) obtained by applying a dispersion containing at least metal oxide particles and a resin.

(Intermediate layer (Y-1-1))

The intermediate layer (Y-1-1) is a layer obtained by applying an aqueous resin composition containing a resin and an aqueous solvent.

The aqueous solvent contained in the aqueous resin composition is, for example, water, a mixed solvent of water and a polar solvent or the like, and is preferably water. The solid content concentration in the aqueous resin composition is preferably 1 to 60 mass% and more preferably 5 to 40 mass% from the viewpoint of liquid stability and film formability. The aqueous resin composition may contain additives such as an antioxidant, a dispersant, and a plasticizer as necessary in addition to the resin component. In addition, a commercially available aqueous resin composition may be used by being diluted with a solvent such as water, alcohol, or propylene glycol monomethyl ether (PGM).

The aqueous resin composition can contain a resin component in a state of being dissolved in an aqueous solvent or in a state of being dispersed as fine particles (preferably colloidal particles). Among them, the aqueous resin composition is desirably a dispersion in which a resin component is dispersed in the form of fine particles in an aqueous solvent (preferably water). In this case, the particle size of the resin component is preferably 0.3 um or less from the viewpoint of dispersion stability of the composition. The pH of the aqueous resin composition is preferably about 5.5 to 9.0 at 25°C from the viewpoint of stability. The viscosity at 25°C of the aqueous resin composition is preferably 5 to 500 mPa · s and more preferably 10 to 50 mPa · s from the viewpoint of coating suitability. In addition, in consideration of the physical properties of an aqueous resin layer to be formed, an aqueous resin composition having the following film characteristics is preferable. A coating film obtained by applying the aqueous resin composition onto a glass plate so as to have a thickness of 1 mm and drying the coating film at 120°C for 1 hour has a glass transition temperature Tg of -58°C to 7°C, a pencil hardness of 4B to 2H, and a tensile strength measured in accordance with JIS K 7113 of 15 to 69 MPa.

Examples of the resin of the intermediate layer (Y-1-1) include at least one selected from a polyurethane resin, an acrylic resin, an epoxy resin, and the like. The resin of the intermediate layer (Y-1-1) is preferably a polyurethane resin, and more preferably an aqueous resin composition containing a polyurethane resin, that is, an aqueous polyurethane resin composition. The aqueous polyurethane resin composition can be prepared, for example, by performing a urethane forming reaction of a high molecular weight polyol compound and an organic polyisocyanate compound together with a chain extender as necessary in a solvent that is inert to the reaction and has high affinity with water to form a prepolymer, neutralizing the prepolymer, and then dispersing the prepolymer in an aqueous solvent containing a chain extender to increase the molecular weight of the prepolymer. For such an aqueous polyurethane resin composition and a method for preparing the composition, for example, paragraphs[0009] to[0013] of JP 3588375 B, paragraphs[0012] to[0021] of JP H08-34897 A, paragraphs[0010] to[0033] of JP H11-92653 A,
paragraphs[0010] to[0033] of JP H11-92655 A, and the like can be referred to. As the aqueous polyurethane resin composition, commercially available aqueous urethane can be used as it is, or used by being diluted with an aqueous solvent as necessary. As commercially available aqueous polyurethanes, for example, it is possible to use "EVAFANOL" series manufactured by Nikka Chemical Co., Ltd., "SUPERFLEX" series manufactured by DKS Co., Ltd., "ADEKA BONTIGHTER" series manufactured by ADEKA Corporation, "OLESTER" series manufactured by Mitsui Chemicals, Inc., "VONDIC" series and "HYDRAN" series manufactured by DIC Corporation, "Impranil" series manufactured by Bayer

AG, "SOFRANATE" series manufactured by Nihon Soflan, "POIZ" series manufactured by Kao Corporation, "SANPRENE" series manufactured by Sanyo Chemical Industries, Ltd., "IZELAX" series manufactured by Hodogaya Chemical Co., Ltd., "NeoRez" series manufactured by Zeneca Group PLC.

(Intermediate layer (Y-1-2))

The intermediate layer (Y-1-2) is obtained by applying a dispersion containing at least metal oxide particles and a resin.

The metal oxide particles are used from the viewpoint of adjusting the refractive index of the intermediate layer (Y-1-2). Examples thereof include particles of tungsten oxide ($WO_3$), zinc oxide (ZnO), aluminum oxide ($Al_2O_3$), titanium oxide ($TiO_2$), zirconium oxide ($ZrO_2$), tin oxide ($SnO_2$), beryllium oxide (BeO), and antimony oxide ($Sb_2O_5$). These metal oxide particles used singly or two or more kinds thereof may be used in combination. Alternatively, composite oxide particles of two or more kinds of metal oxides can also be used. The particle size of the metal oxide particles is preferably in a range of 5 to 30 nm from the viewpoint of optical characteristics.

Preferred examples of the resin contained in the dispersion include the same resins as those used for the intermediate layer (Y-1-1).

The dispersion may contain an aqueous solvent. The aqueous solvent is, for example, water, a mixed solvent of water and a polar solvent or the like, and is preferably water. The solid content concentration in the aqueous resin composition is preferably 1 to 60 mass% and more preferably 5 to 40 mass% from the viewpoint of liquid stability and film formability. The aqueous resin composition may contain additives such as an antioxidant, a dispersant, and a plasticizer as necessary in addition to the resin component. In addition, a commercially available aqueous resin composition may be used by being diluted with a solvent such as water, alcohol, or propylene glycol monomethyl ether (PGM).

[Intermediate layer (Y-2)]

The intermediate layer (Y-2) is an aqueous resin layer formed of an aqueous resin composition containing a resin and an aqueous solvent.

The aqueous solvent contained in the aqueous resin composition is, for example, water, a mixed solvent of water and a polar solvent or the like, and is preferably water. The solid content concentration in the aqueous resin composition is preferably 1 to 60 mass% and more preferably 5 to 40 mass% from the viewpoint of liquid stability and film formability. The aqueous resin composition may contain additives such as an antioxidant, a dispersant, and a plasticizer as necessary in addition to the resin component. In addition, a commercially available aqueous resin composition may be used by being diluted with a solvent such as water, alcohol, or propylene glycol monomethyl ether (PGM).

The aqueous resin composition can contain a resin component in a state of being dissolved in an aqueous solvent or in a state of being dispersed as fine particles (preferably colloidal particles). Among them, the aqueous resin composition is desirably a dispersion in which a resin component is dispersed in the form of fine particles in an aqueous solvent (preferably water). In this case, the particle size of the resin component is preferably 0.3 um or less from the viewpoint of dispersion stability of the composition. The pH of the aqueous resin composition is preferably about 5.5 to 9.0 at 25°C from the viewpoint of stability. The viscosity at 25°C of the aqueous resin composition is preferably 5 to 500 mPa · s and more preferably 10 to 50 mPa · s from the viewpoint of coating suitability. In addition, in consideration of the physical properties of an aqueous resin layer to be formed, an aqueous resin composition having the following film characteristics is preferable. A coating film obtained by applying the aqueous resin composition onto a glass plate so as to have a thickness of 1 mm and drying the coating film at 120°C for 1 hour has a glass transition temperature Tg of -58°C to 7°C, a pencil hardness of 4B to 2H, and a tensile strength measured in accordance with JIS K 7113 of 15 to 69 MPa.

Preferred examples of the resin include the same resins as those used for the intermediate layer (Y-1-1).

The thickness of the intermediate layer (Y-2) is preferably 0.1 um or more, more preferably 0.5 um or more from the viewpoint of further suppressing decolorization, and is preferably 5 um or less, more preferably 3 um or less from the viewpoint of ease of production and cost.

[Intermediate layer (Y-3)]

The intermediate layer (Y-3) is a cured film formed of a curable composition containing an inorganic oxide and a silicon compound.

Examples of the inorganic oxide include silicon oxide, aluminum oxide, titanium oxide, zirconium oxide, tungsten oxide, zinc oxide, tin oxide, beryllium oxide, antimony oxide, and composite oxides of two or more kinds of these inorganic oxides. These inorganic oxides may be used singly or in combination of two or more kinds thereof. Among these inorganic oxides, silicon oxide is preferable. Colloidal silica may be used as the inorganic oxide.

The content of the inorganic oxide is preferably 20 mass% or more and 80 mass% or less, more preferably 25

mass% or more and 70 mass% or less, and still more preferably 25 mass% or more and 50 mass% or less in the solid content of the curable composition.

Examples of the silicon compound include silicon compounds having a hydrolyzable group such as an alkoxy group. The silicon compound is preferably a silane coupling agent having an organic group bonded to a silicon atom and a hydrolyzable group. The organic group bonded to a silicon atom is preferably an organic group having a functional group such as an epoxy group such as a glycidoxy group, a vinyl group, a methacryloxy group, an acryloxy group, a mercapto group, an amino group, or a phenyl group, and more preferably an organic group having an epoxy group. The silicon compound may have an alkyl group bonded to silicon.

Examples of commercially available products of the silane coupling agent include KBM-303, KBM-402, KBM-403, KBE-402, KBE-403, KBM-1403, KBM-502, KBM-503, KBE-502, KBE-503, KBM-5103, KBM-602, KBM-603, KBM-903, KBE-903, KBE-9103, KBM-573, KBM-575, KBM-9659, KBE-585, KBM-802, KBM-803, KBE-846, and KBE-9007 (trade name) manufactured by Shin-Etsu Chemical Co., Ltd.

The content of the silicon compound is preferably 20 mass% or more and 90 mass% or less, more preferably 30 mass% or more and 75 mass% or less, and still more preferably 50 mass% or more and 75 mass% or less in the solid content of the curable composition.

The curable composition may further contain a polyfunctional epoxy compound.

The curable composition described above can be prepared by mixing optional components such as an organic solvent, a leveling agent, and a curing catalyst, as necessary, in addition to the components described above.

The thickness of the intermediate layer (Y-3) is preferably 0.5 um or more, more preferably 0.8 um or more, and still more preferably 1.0 um or more from the viewpoint of further suppressing decolorization, and is preferably 6 um or less, more preferably 5 um or less, and still more preferably 4 um or less from the viewpoint of ease of production and cost.

<Water-absorbent antifogging layer (Z)>

The antifogging layer (Z) is a layer having water absorbency. Here, the phrase "the antifogging layer (Z) has water absorbency" means that the material constituting the antifogging layer (Z) exhibits a property of taking moisture therein. The phrase "the antifogging layer (Z) has water absorbency" specifically means that when a transparent substrate on which the antifogging layer (Z) is formed is stored at room temperature, and then the transparent substrate provided with the antifogging layer (Z) is placed at a position 35 mm away from the surface of hot water at 40°C, and exposed to vapor from the hot water for 15 seconds, there is no irregular reflection on the surface of the antifogging layer (Z) due to small water droplets, and there is no distortion due to condensation on an image viewed through the transparent substrate provided with the antifogging layer after the vapor is brought into contact with the transparent substrate.

The antifogging layer (Z) is present on at least one surface side of the substrate (X), but may be present on both surfaces thereof.

The water-absorbent antifogging layer (Z) is preferably an outermost layer of the spectacle lens from the viewpoint of sufficiently exhibiting antifogging properties.

The water-absorbent antifogging layer (Z) may be in direct contact with the intermediate layer (Y) or may be provided with another layer interposed between the water-absorbent antifogging layer (Z) and the intermediate layer (Y), but is preferably in direct contact with the intermediate layer (Y).

The thickness of the antifogging layer (Z) is preferably 1 to 100 μm, more preferably 3 to 60 μm, still more preferably 6 to 50 um, still even more preferably 8 to 40 um, still even more preferably 8 to 40 μm, and still even more preferably 12 to 30 um from the viewpoint of ease of production.

The thickness of the antifogging layer (Z) is preferably 1 um or more, more preferably 3 um or more, still more preferably 6 um or more, still even more preferably 8 um or more, and still even more preferably 12 um or more from the viewpoint of improving antifogging properties. The thickness of the antifogging layer (Z) is preferably 100 um or less, more preferably 60 um or less, still more preferably 50 um or less, still even more preferably 40 um or less, and still even more preferably 30 um or less from the viewpoint of ease of production.

The antifogging layer (Z) preferably has water repellent performance. Accordingly, the antifogging performance is further improved.

[Coating composition]

The antifogging layer (Z) is preferably formed of a cured film of a coating composition containing the following components (A) to (C):

Component (A): a (meth)acrylic resin having a constituent unit derived from a monomer (a-1) represented by the following general formula (1), a constituent unit derived from a monomer (a-2) represented by the following general

formula (2), a constituent unit derived from a hydroxyalkyl (meth)acrylate (a-3), and a constituent unit derived from a monomer (a-4) represented by the following general formula (3);
Component (B): a polyol compound (B); and
Component (C): a polyfunctional isocyanate compound (C),

[Chemical Formula 4]

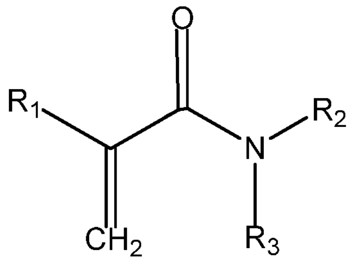

(1)

wherein $R_1$ is a hydrogen atom or a methyl group, and $R_2$ and $R_3$ are each independently a hydrogen atom or a linear or branched alkyl group having 1 to 3 carbon atoms,

[Chemical Formula 5]

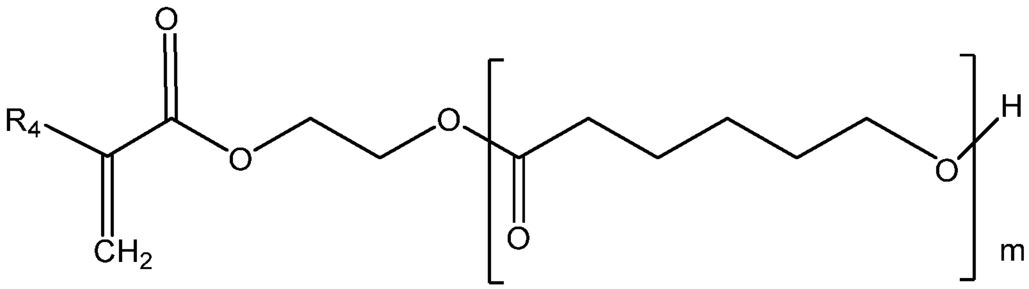

(2)

wherein $R_4$ is a hydrogen atom or a methyl group, and m is an integer of 1 to 5, and

[Chemical Formula 6]

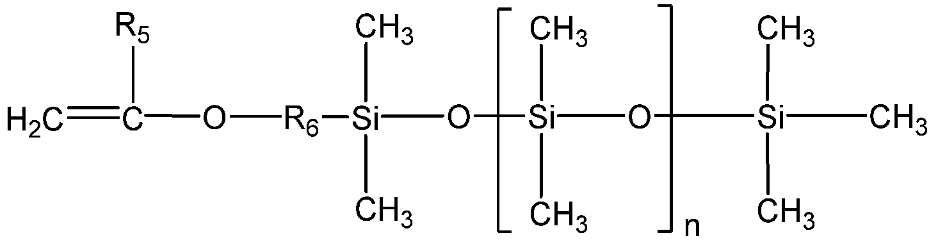

(3)

wherein $R_5$ is a hydrogen atom or a methyl group, $R_6$ is a divalent organic group, and n is 0 or an integer of 1 or more.

The constituent unit (a-1) contained in the component (A) (also referred to as a (meth)acrylic resin) has an amide group, is highly hydrophilic, and easily retains moisture therein. It is therefore considered that moisture adhering to the surface of the antifogging layer (Z) obtained by curing the coating composition is easily absorbed into the cured film. In addition, it is considered that by blending the polyol compound (B), a gap for sufficiently absorbing moisture can be present while maintaining the crosslinking density required as the antifogging layer (Z). For these reasons, it is considered that antifogging properties are imparted.

The constituent unit (a-2) contained in the resin (A) is a constituent unit having a polycaprolactone structure, and contributes to improvement in flexibility and elasticity of the antifogging layer (Z) due to its flexible chemical skeleton. In addition, by containing the constituent unit (a-3) which is more rigid than the constituent unit (a-2), a balance between flexibility and elasticity is secured. On the other hand, the polydimethylsiloxane chain of the constituent unit (a-4) contributes to improvement in slipperiness with respect to the antifogging layer (Z). It is therefore considered that when an external force is applied to the antifogging layer (Z), the above-described two effects of absorbing the external force by the flexibility and elasticity of the antifogging layer (Z) and releasing the external force to the outside of the antifogging layer (Z) by the slipperiness are synergistically exhibited, and as a result, the antifogging layer (Z) is less likely to be scratched.

In the coating composition, preferably, the proportion of the constituent unit derived from the monomer (a-1) is 20 mass% or more and 65 mass% or less, the proportion of the constituent unit derived from the monomer (a-2) is 10 mass% or more and 40 mass% or less, and the proportion of the constituent unit derived from the monomer (a-4) is 1 mass% or more and 10 mass% or less, with respect to 100 mass% of all the constituent units constituting the component (A). In the coating composition, the ratio (NCO)/(OH) of the number (NCO) of isocyanate groups contained in the component (C) to the total amount (OH) obtained by adding the number of hydroxyl groups contained in the component (A) and the number of hydroxyl groups contained in the component (B) is preferably 0.15 or more and 0.55 or less.

It is considered that when the composition of the coating composition is as described above, the equivalent ratio (NCO/OH) is set to a specific range smaller than 1 while maintaining the balance (amount ratio) between the constituent unit (a-2) and the constituent unit (a-3) having a hydroxyl group in the component (A), so that the hardness of the antifogging layer (Z) can be increased to an extent that the friction resistance is improved. In addition, it is considered that the equivalent ratio (NCO/OH) is set to a specific range smaller than 1 while maintaining the structural balance between the constituent unit (a-2) and the constituent unit (a-3) having a hydroxyl group in the component (A), so that the crosslinking density of the antifogging layer (Z) is increased, and the solvent resistance of the antifogging layer (Z) is improved.

The components contained in the coating composition of the present embodiment will be described below.

(Component (A): (meth)acrylic resin)

The coating composition of the present embodiment preferably contains a (meth)acrylic resin as the component (A), that is, a (meth)acrylic resin having a constituent unit derived from a monomer (a-1) represented by the general formula (1), a constituent unit derived from a monomer (a-2) represented by the general formula (2), a constituent unit derived from a hydroxyalkyl (meth)acrylate (a-3), and a constituent unit derived from a monomer (a-4) represented by the general formula (3).

As described above, it is considered that the constituent unit (a-1) is mainly involved in the absorption of water (moisture).

The (meth)acrylic resin can be typically obtained by polymerizing the monomer (a-1), the monomer (a-2), the monomer (a-3), and the monomer (a-4). Details of the polymerization method will be described later.

In the present embodiment, 100% of the constituent units constituting the (meth)acrylic resin need not be a constituent unit derived from a (meth)acrylic monomer. That is, the (meth)acrylic resin may partially (but not entirely) contain a constituent unit derived from a monomer other than a (meth)acrylic monomer.

In order to obtain the effect derived from the (meth)acrylic structure sufficiently, 50 mass% or more of all the constituent units of the (meth)acrylic resin is preferably a constituent unit derived from a (meth)acrylic monomer. More preferably, 80 mass% or more of all the constituent units of the (meth)acrylic resin is a constituent unit derived from a (meth)acrylic monomer. Still more preferably, all (100%) constituent units of the (meth)acrylic resin are a constituent unit derived from a (meth)acrylic monomer.

The monomer (a-1) is not particularly limited as long as the monomer has the structure of the general formula (1) described above. Specific examples thereof include (meth)acrylamide, N-methylacrylamide, N,N-dimethyl (meth)acrylamide, N-ethyl (meth)acrylamide, N,N-diethyl (meth)acrylamide, N-n-propyl (meth)acrylamide, and N-isopropyl (meth)acrylamide.

At least one kind of the monomer (a-1) may be used, and two or more kinds thereof may be used in combination. For example, a (meth)acrylic resin may be obtained by performing a polymerization reaction using two or more kinds of the monomers listed above.

The monomer (a-1) particularly preferably contains N,N-dimethyl (meth)acrylamide or N,N-diethyl (meth)acrylamide from the viewpoint of improving antifogging performance.

In the present embodiment, the content of the constituent unit derived from the monomer (a-1) in the (meth)acrylic resin is preferably 20 to 65 mass% with respect to the total amount of all the constituent units of the resin. The content is more preferably 35 to 60 mass%, and still more preferably 40 to 55 mass%. When the content of the constituent unit derived from the monomer (a-1) is 20 mass% or more, an antifogging layer (Z) exhibiting antifogging performance suitable for practical use is easily formed. When the content of the constituent unit derived from the monomer (a-1) is 65 mass% or less, the ratio of constituent units derived from other monomers is prevented from being relatively decreased, making it easy to maintain the balance of the entire composition.

The monomer (a-2) is not particularly limited as long as the monomer has the structure of the general formula (2) .

In the present embodiment, the (meth)acrylic resin contains the constituent unit derived from the monomer (a-2) in an amount of preferably 10 to 40 mass%, more preferably 20 to 38 mass%, and still more preferably 25 to 35 mass% with respect to the total amount of all the constituent units of the resin.

When the content of the constituent unit derived from the monomer (a-2) is 10 mass% or more, the flexibility of the antifogging layer (Z) is easily secured, and when the content is 40 mass% or less, the elasticity of the antifogging layer (Z) is easily secured.

The (meth)acrylic resin may contain a plurality of types of repeating units derived from the monomer (a-2).

The monomer (a-3) is a hydroxyalkyl (meth)acrylate. Specific examples of the hydroxyalkyl (meth)acrylate include hydroxyethyl (meth)acrylate, hydroxypropyl (meth)acrylate, and hydroxybutyl (meth)acrylate. In the present embodiment, among these, hydroxyethyl (meth)acrylate is preferable.

In the present embodiment, the content of the constituent unit derived from the monomer (a-3) in the (meth)acrylic resin is preferably 1 to 30 mass%, more preferably 2 to 20 mass%, and still more preferably 3 to 15 mass% with respect to the total amount of all the constituent units of the (meth)acrylic resin.

The monomer (a-3) has a hydroxyl group as with the monomer (a-2), and undergoes a crosslinking reaction with a polyfunctional isocyanate compound described later to form the antifogging layer (Z).

In the present embodiment, the monomer (a-2) is subjected to a crosslinking reaction with a polyfunctional isocyanate compound together with the monomer (a-3) instead of subjecting only the monomer (a-2) to a crosslinking reaction to form the antifogging layer (Z), thereby yielding an antifogging layer (Z) having various physical properties.

As described above, since the (meth)acrylic resin contains the constituent unit derived from the monomer (a-2) and the constituent unit derived from the monomer (a-3), the (meth)acrylic resin has a hydroxyl group as a whole, that is, has a hydroxyl value. Therefore, the (meth)acrylic resin can form a crosslinked structure by being reacted with a polyfunctional isocyanate compound described later together with a polyol compound described later.

The hydroxyl value of the (meth)acrylic resin is preferably 40 to 150 mgKOH/g, more preferably 70 to 140 mgKOH/g, and still more preferably 90 to 130 mgKOH/g.

Within this numerical range, the (meth)acrylic resin reacts with a polyfunctional isocyanate compound (described later) together with a polyol compound (described later), so that the crosslinked structure is easily controlled appropriately. Therefore, the antifogging layer (Z) can be hardened while maintaining the flexibility and elasticity of the antifogging layer (Z). Therefore, it is easy to achieve a higher level of compatibility between the scratch resistance, reduction in friction resistance, and solvent resistance of the antifogging layer (Z).

The hydroxyl value means the number of mg of potassium hydroxide required to neutralize acetic acid bonded to a hydroxyl group when 1 g of a sample is acetylated.

The monomer (a-4) is not particularly limited as long as the monomer has the structure of the general formula (3) .

The (meth)acrylic resin may contain a plurality of types of repeating units derived from the monomer (a-4). For example, a (meth)acrylic resin may be obtained by performing a polymerization reaction using two or more kinds of the monomers listed above.

In the present embodiment, the content of the constituent unit derived from the monomer (a-4) in the (meth)acrylic resin is preferably 1 to 10 mass%, more preferably 2 to 8 mass%, and still more preferably 3 to 7 mass% with respect to the total amount of all the constituent units of the resin.

When the content of the constituent unit derived from the monomer (a-4) is 1 mass% or more, a water-absorbent antifogging layer (Z) that satisfies scratch resistance is easily obtained. When the content is 10 mass% or less, a homogeneous (meth)acrylic resin is easily synthesized.

The (meth)acrylic resin may or may not include any constituent unit (constituent unit (a-5)) other than the constituent unit (a-1), the constituent unit (a-2), the constituent unit (a-3), and the constituent unit (a-4). Examples of the constituent unit (a-5) include constituent units derived from monomers represented below. By including such a constituent unit in the (meth)acrylic resin, the glass transition temperature of the (meth)acrylic resin and the physical properties (hardness, softness, and the like) of the antifogging layer (Z) can be adjusted and optimized.

Examples of the constituent unit (a-5) include constituent units derived from a monomer represented by the general formula $CH_2$=CR-COO-R' where R is a hydrogen atom or a methyl group, and R' is an alkyl group, a monocyclic or polycyclic cycloalkyl group, an aryl group, or an aralkyl group.

Specific examples of the monomer include methyl (meth)acrylate, ethyl (meth)acrylate, n-butyl (meth)acrylate, isobutyl (meth)acrylate, tert-butyl (meth)acrylate, 2-ethylhexyl (meth)acrylate, isodecyl (meth)acrylate, n-lauryl (meth)acrylate, n-stearyl (meth)acrylate, phenyl (meth)acrylate, and benzyl (meth)acrylate.

Among them, a monomer in which R' is an alkyl group having 1 to 8 carbon atoms is preferable, a monomer in which R' is an alkyl group having 1 to 6 carbon atoms is more preferable, and a monomer in which R' is an alkyl group having 1 to 4 carbon atoms is still more preferable.

The (meth)acrylic resin may include a plurality of types of repeating units corresponding to the constituent unit (a-5). For example, a (meth)acrylic resin may be obtained by performing a polymerization reaction using two or more kinds of the monomers listed above as specific examples.

When the (meth)acrylic resin contains the constituent unit (a-5), the content thereof is preferably 1 to 40 mass%, more preferably 3 to 30 mass%, and still more preferably 5 to 20 mass% with respect to the total amount of all the constituent units of the (meth)acrylic resin.

The mass average molecular weight (Mw) of the (meth)acrylic resin is not particularly limited, but is preferably 10,000 to 100,000, more preferably 20,000 to 70,000, and still more preferably 30,000 to 60,000. When the mass average molecular weight is 10,000 or more, it is easy to obtain desired antifogging performance, and when the mass average molecular weight is 100,000 or less, the coating composition tends to be excellent in application suitability when applied to an object to be coated such as a spectacle lens.

The mass average molecular weight can be determined by gel permeation chromatography (GPC) using polystyrene as a standard substance.

The glass transition temperature of the (meth)acrylic resin is not particularly limited, but is preferably 20 to 120°C, more preferably 30 to 110°C, and still more preferably 35 to 100°C.

The glass transition temperature of the (meth)acrylic resin can be determined by various methods, and can be determined, for example, based on the following Fox's equation.

$$1/Tg = (W_1/Tg_1) + (W_2/Tg_2) + (W_3/Tg_3) + ... + (W_n/Tg_n)$$

wherein Tg represents the glass transition temperature (K) of the (meth)acrylic resin, $W_1$, $W_2$, $W_3$ ... $W_n$ each represent the mass fraction of each monomer, $Tg_1$, $Tg_2$, $Tg_3$ ... $Tg_n$ each represent the glass transition temperature (K) of a homopolymer composed of a monomer corresponding to the mass fraction of each monomer.

In the present specification, the glass transition temperature of the (meth)acrylic resin (not the glass transition temperature of the antifogging layer, but the glass transition temperature of the (meth)acrylic resin alone) means a glass transition temperature determined based on the above equation. Note that the glass transition temperature of a monomer whose glass transition temperature is unknown, such as special monomers or polyfunctional monomers is determined using only a monomer whose glass transition temperature is known.

The (meth)acrylic resin can be typically obtained by a polymerization reaction. The polymerization reaction may be performed by various methods such as radical polymerization, cationic polymerization, and anionic polymerization, and among them, radical polymerization is preferable. The polymerization may be any of solution polymerization, suspension polymerization, emulsion polymerization, and the like. Among them, solution polymerization is preferable from the viewpoint of precise control of polymerization and the like.

As the polymerization initiator for radical polymerization, a known polymerization initiator can be used. Examples of the polymerization initiator include azo-based initiators such as azobisisobutyronitrile, 2,2-azobis(2-methylbutyronitrile), 2,2-azobis(2-methylpropionitrile), and 2,2-azobis(2,4-dimethylvaleronitrile); peroxide-based initiators such as benzoyl peroxide, t-butyl peroxyoctanoate, diisobutyl peroxide, di(2-ethylhexyl)peroxypivalate, decanoyl peroxide, t-butyl peroxy-2-ethylhexanoate, and t-butyl peroxybenzoate; and redox-based initiators combining an oxidizing agent and a reducing agent, such as hydrogen peroxide and an iron(II) salt, and a persulfate and sodium bisulfite. These may be used singly or in combination of two or more kinds thereof.

The blending amount of the polymerization initiator is not particularly limited, but is preferably 0.001 to 10 parts by mass based on 100 parts by mass of the total amount of the mixed liquid of monomers to be polymerized.

In the polymerization reaction, a known chain transfer agent, a polymerization inhibitor, a molecular weight modifier, or the like may be appropriately used. Further, the polymerization reaction may be performed in one stage or in two or more stages. The temperature of the polymerization reaction is not particularly limited, but is typically in a range of 50°C to 200°C, preferably 80°C to 150°C.

(Component (B): polyol compound)

The coating composition of the present embodiment preferably contains a polyol compound. When the coating composition contains the polyol compound, the polyol compound reacts with the polyfunctional isocyanate compound described later together with the (meth)acrylic resin, making it possible to form an antifogging layer (Z) having more excellent antifogging durability. The number of hydroxyl groups of the polyol compound in one molecule is 2 or more, preferably 2 to 6, and more preferably 2 to 4.

The polyol compound preferably contains at least one or more polyol compounds selected from the group consisting of a polycaprolactone polyol, a polycarbonate polyol, and a polyether polyol. The chemical structures of these polyol compounds are moderately flexible and elastic. Therefore, such polyol compounds can further improve the flexibility and elasticity of the cured film.

The polycaprolactone polyol can be used without particular limitation as long as it is a compound having a ring-opened structure of caprolactone and two or more hydroxyl groups in one molecule.

The polycarbonate polyol can be used without particular limitation as long as it is a compound having a carbonate group represented by -O-(C=O)-O- and two or more hydroxyl groups in one molecule. The polycarbonate polyol can be obtained by reacting one or more kinds of polyol raw materials (polyhydric alcohols) with a carbonate ester or phosgene.

The polyol raw material is not particularly limited, and examples thereof include aliphatic polyols, polyols having an alicyclic structure, and aromatic polyols. In the present embodiment, an aliphatic polyol having no alicyclic structure is preferable from the viewpoint of the flexibility of the cured film.

Examples of the carbonate ester include aliphatic carbonate esters such as dimethyl carbonate and diethyl carbonate; aromatic carbonate esters such as diphenyl carbonate; and cyclic carbonate esters such as ethylene carbonate. Among them, an aliphatic carbonate ester is preferable, and dimethyl carbonate is particularly preferable from the viewpoint of availability and ease of production.

The polyether polyol can be used without particular limitation as long as it is a compound having an ether bond (-O-) and two or more hydroxyl groups in one molecule.

Specific examples of the compound include polyether polyols obtained by addition polymerization of an alkylene oxide such as ethylene oxide, propylene oxide, or butylene oxide, using, as an initiator, a compound having two or more, preferably two or three active hydrogen groups such as a low molecular weight polyol such as ethylene glycol, 1,2-propanediol, 1,3-propanediol, 1,2-butanediol, 1,3-butanediol, 1,4-butanediol, 1,5-pentanediol, 1,6-hexanediol, 1,8-octanediol, 1,9-nonanediol, 3-methyl-1,5-pentanediol, 3,3-dimethylolheptane, diethylene glycol, dipropylene glycol, neopentyl glycol, cyclohexane-1,4-diol, cyclohexane-1,4-dimethanol, dimer acid diol, bisphenol A, bis(β-hydroxyethyl)benzene, xylylene glycol, glycerin, trimethylolpropane, and pentaerythritol; or a low molecular weight polyamine such as ethylenediamine, propylenediamine, toluenediamine, meta-phenylenediamine, diphenylmethanediamine, and xylylenediamine; and polyether polyols obtained by ring-opening polymerization of a cyclic ether monomer including an alkyl glycidyl ether such as methyl glycidyl ether, an aryl glycidyl ether such as phenyl glycidyl ether, and tetrahydrofuran.

In the present embodiment, the polyol compound may be a compound corresponding to a plurality of polycaprolactone polyols, polycarbonate polyols, and polyether polyols. The polyol compound may be, for example, a polyether polyester polyol having an ether bond and an ester bond.

The polyol compound may also contain a plurality of types of polycaprolactone polyols, polycarbonate polyols, and polyether polyols.

The hydroxyl value of the polyol compound is preferably 50 to 500 mgKOH/g, more preferably 100 to 350 mgKOH/g, and still more preferably 150 to 250 mgKOH/g. By setting the amount of the hydroxyl group to an appropriate amount, the crosslinked structure formed by the reaction with the polyfunctional isocyanate compound described below is controlled, thus making it easy to improve the flexibility, elasticity, and the like of the cured film.

In the present embodiment, the mass average molecular weight (Mw) of the polyol compound is preferably 450 to 2,500, more preferably 500 to 1,500, and still more preferably 500 to 700. By setting the molecular weight to an appropriate value, it is possible to more easily achieve both suppression of the change in appearance of the cured film due to improvement in flexibility and elasticity and durability of the cured film such as gasoline resistance, at a higher level.

The content of the polyol compound in the coating composition is preferably 5 to 200 parts by mass, more preferably 15 to 180 parts by mass, still more preferably 20 to 150 parts by mass, still even more preferably 20 to 100 parts by mass, still even more preferably 20 to 50 parts by mass, and still even more preferably 20 to 40 parts by mass with respect to 100 parts by mass of the (meth)acrylic resin. Within this numerical range, the performance derived from the polyol compound is easily obtained, and the balance with other components is easily achieved.

In the present embodiment, the polyol compound preferably contains a polycaprolactone polyol among the polycaprolactone polyol, the polycarbonate polyol, and the polyether polyol described above, and particularly preferably contains a polycaprolactone diol (a compound having a caprolactone structure and two hydroxyl groups) among polycaprolactone polyols.

This is because there is a tendency that the polycaprolactone diol as the polyol compound tends to have good compatibility with the (meth)acrylic resin as the component (A), which has the structure of the general formula (2) described above, that is, the caprolactone structure, and also tends to improve antifogging performance without excessively increasing the crosslinking density.

(Component (C): polyfunctional isocyanate compound)

The coating composition of the present embodiment preferably contains a polyfunctional isocyanate compound as the component (C). When the coating composition contains the polyfunctional isocyanate compound, the hydroxyl groups of the constituent unit (a-2) and the constituent unit (a-3) contained in the (meth)acrylic resin as the component (A) and the hydroxyl group of the polyol compound as the component (B), and the polyfunctional isocyanate compound cause a crosslinking reaction, so that an antifogging layer (Z) having excellent antifogging durability is obtained.

The polyfunctional isocyanate compound is a compound having two or more isocyanate groups (including isocyanate groups protected by a leaving group) in one molecule. Preferably, the number of functional groups of the

polyfunctional isocyanate compound is more preferably 2 to 6 per molecule, and still more preferably 2 to 4 per molecule.

Examples of the polyfunctional isocyanate compound include aliphatic diisocyanates such as lysine isocyanate, hexamethylene diisocyanate, and trimethylhexane diisocyanate; cyclic aliphatic diisocyanates such as hydrogenated xylylene diisocyanate, isophorone diisocyanate, methylcyclohexane-2,4-(or 2,6)-diisocyanate, 4,4'-methylenebis(cyclohexyl isocyanate), and 1,3-(isocyanatomethyl)cyclohexane; and tri- or higher functional isocyanates such as lysine triisocyanate.

As the polyfunctional isocyanate compound as the component (C), in addition to those described above, a multimer thereof such as a biuret type, an isocyanurate type, or an adduct type may be used. Among them, a biuret type polyfunctional isocyanate compound having moderate rigidity is preferable.

In the present embodiment, the content of the polyfunctional isocyanate compound in the coating composition is not particularly limited as long as it is blended according to the equivalent ratio (NCO)/(OH) described later. The content is usually 5 to 100 parts by mass, preferably 7 to 75 parts by mass, more preferably 10 to 60 parts by mass, still more preferably 10 to 50 parts by mass, still even more preferably 15 to 40 parts by mass, and still even more preferably 20 to 30 parts by mass with respect to 100 parts by mass of the (meth)acrylic resin. Within this numerical range, it is considered that necessary and sufficient crosslinking is performed in the cured film.

The molar amount (that is, equivalent ratio (NCO)/(OH)) of the isocyanate groups (including a blocked isocyanate group) contained in the polyfunctional isocyanate compound to the hydroxyl groups contained in the (meth)acrylic resin and the polyol compound is preferably in a range of 0.15 to 0.55. When the equivalent ratio (NCO)/(OH) is within this range, the crosslinking density becomes sufficiently high, and as a result, functions such as antifogging properties and solvent resistance as a cured film become sufficient.

From this viewpoint, the equivalent ratio (NCO)/(OH) is preferably 0.25 to 0.50 and more preferably 0.35 to 0.45.

The solid content concentration of the coating composition is preferably 10.0 to 40.0 mass%. When the solid content concentration is 10.0 mass% or more, the film thickness of the water-absorbent antifogging layer (Z) can be increased. When the solid content concentration is 40.0 mass% or less, a water-absorbent antifogging layer (Z) having a uniform film thickness can be obtained. From this viewpoint, the solid content concentration of the coating composition is more preferably 12.0 to 30.0 mass%, still more preferably 15.0 to 30.0 mass%, and still even more preferably 16.5 to 24.5 mass%.

(Form of coating composition)

The coating composition of the present embodiment may be a one-component type, that is, a state in which all components other than a solvent are substantially uniformly mixed (dissolved or dispersed) in the solvent. When the polyfunctional isocyanate compound is a blocked isocyanate, the one-component type is preferable.

As another aspect, the coating composition of the present embodiment may be a two-component type. By preparing the coating composition as a two-component type, the storage stability of the coating composition can be improved.

For example, the coating composition of the present embodiment may be composed of (1) a liquid A containing a (meth)acrylic resin and/or a polyol compound but not containing a polyfunctional isocyanate compound, and (2) a liquid B containing a polyfunctional isocyanate compound but not containing a (meth)acrylic resin and a polyol compound. The liquid A and the liquid B may be stored in separate containers, and the liquid A and the liquid B may be mixed immediately before use (application).

In this case, components (additives and the like) other than the (meth)acrylic resin, the polyol compound, and the polyfunctional isocyanate compound may be contained in the liquid A, contained in the liquid B, or prepared in another container.

In particular, when the polyfunctional isocyanate compound is not a blocked isocyanate (that is, when the isocyanate group is present in the form of -NCO in the system), the coating composition is preferably a two-component type.

(Solvent)

The coating composition of the present embodiment may also contain a solvent. The use of the solvent makes it easy to adjust the viscosity and the solid content of the coating composition.

Examples of the solvent include aromatic hydrocarbon solvents such as toluene and xylene; alcohol solvents such as methanol, ethanol, isopropyl alcohol, n-butanol, t-butanol, isobutanol, and diacetone alcohol; ketone solvents such as acetone, methyl ethyl ketone, methyl isobutyl ketone, and cyclohexanone; ester solvents such as ethyl acetate, propyl acetate, butyl acetate, and isobutyl acetate; and glycol ether solvents such as propylene glycol monomethyl acetate, propylene glycol monomethyl ether, and propylene glycol monomethyl ether acetate.

Among them, t-butanol, diacetone alcohol, methyl ethyl ketone, ethyl acetate, and propylene glycol monomethyl

ether acetate are preferable from the viewpoint of low reactivity with isocyanate, solubility, drying property, and the like.

The content of the solvent in the coating composition is preferably 20 to 90 mass%, more preferably 30 to 85 mass%, and still more preferably 35 to 80 mass% from the viewpoint of controlling the film thickness of the antifogging layer (Z).

The solid content of the coating composition is preferably 5 mass% or more, more preferably 10 mass% or more, and still more preferably 15 mass% or more from the viewpoint of obtaining a spectacle lens having more excellent antifogging properties, and is preferably 50 mass% or less, more preferably 40 mass% or less, and still more preferably 30 mass% or less from the viewpoint of obtaining a spectacle lens having excellent appearance.

The total content of the components (A), (B) and (C) in the solid content of the coating composition is preferably 60 mass% or more, more preferably 80 mass% or more, still more preferably 90 mass% or more, still even more preferably 95 mass% or more, and preferably 100 mass% or less, for example, 100 mass% from the viewpoint of improving antifogging properties and scratch resistance.

(Other additives)

The coating composition may contain additives such as a curing catalyst, an ultraviolet absorber, a light stabilizer, a surfactant, a leveling agent, and an antifoaming agent as necessary.

The content of the additive is, for example, preferably 0.001 to 5 mass%, more preferably 0.01 to 4 mass%, and still more preferably 0.1 to 3 mass% with respect to the total mass of the coating composition.

The coating composition can be prepared by dissolving or dispersing each component used as necessary in a solvent.

Each component can be dissolved or dispersed in the solvent simultaneously or sequentially in any order. A specific dissolution or dispersion method is not particularly limited, and a known method can be adopted without any limitation.

<Other layers>

The spectacle lens may be provided with a functional layer other than the antifogging layer (Z) and the intermediate layer (Y).

Examples of the functional layer include a hard coat layer, an antireflection layer, and a primer layer.

The functional layer may be provided on a first main surface of the lens substrate, may be provided on a second main surface of the lens substrate, or may be provided on both the first main surface and the second main surface of the lens substrate. In addition, the antifogging layer (Z) may be provided on the functional layer after providing the functional layer on the lens substrate, or the functional layer may be provided after providing the antifogging layer (Z) on the lens substrate.

[Method for producing colored spectacle lens]

The method for producing a spectacle lens according to the present embodiment preferably includes step 1 of forming an intermediate layer (Y) and step 2 of forming an antifogging layer (Z).

<Step 1>

A composition for an intermediate layer (Y) (composition y) to be used for forming the intermediate layer (Y) is prepared by mixing the above-described components used as necessary, and optional components such as an organic solvent, a leveling agent, and a curing catalyst as necessary, in addition to the components described above.

Subsequently, it is preferable to apply the obtained composition y onto the substrate (X) containing a colorant or another layer formed on the substrate (X) containing a colorant, and then perform pre-curing at preferably 70 to 150°C, more preferably 75 to 140°C, and still more preferably 80 to 130°C, for preferably 10 to 60 minutes, more preferably 15 to 50 minutes, and still more preferably 20 to 40 minutes.

The method for applying the composition y is not particularly limited, and examples thereof include an air spray method, an airless spray method, an electrostatic coating method, a roll coater method, a flow coater method, a spin coating method, and a dipping method. A dipping method is preferable from the viewpoint of productivity.

Subsequently, the coating film is dried and cured at 20 to 160°C for 10 to 140 minutes, preferably at 60 to 130°C for 20 to 150 minutes. The temperature and time for drying and curing may be appropriately adjusted in consideration of the type of solvent, the heat resistance of the lens substrate, and the like.

In addition, if necessary, after the functional layer (hard coat layer, primer layer, antireflection layer, and the like) described above is provided on the substrate, the intermediate layer (Y) may be provided on the functional layer,

or after the intermediate layer (Y) is provided on the substrate, the functional layer may be provided on the intermediate layer (Y).

<Step 2>

First, a coating composition for an antifogging layer (Z) (coating composition z) is prepared by dissolving or dispersing the above-described components used as necessary in a solvent.
Subsequently, it is preferable to apply the coating composition z on the intermediate layer (Y) formed on the substrate or on another layer formed on the substrate having the intermediate layer (Y), and subsequently perform pre-curing at preferably 70 to 120°C, more preferably 75 to 110°C, and still more preferably 80 to 100°C, for preferably 10 to 60 minutes, more preferably 15 to 50 minutes, and still more preferably 20 to 40 minutes.
The application and the pre-curing may be performed once or twice or more. By performing the application and the pre-curing twice or more, it is easy to increase the thickness of the antifogging layer (Z).
The method for applying the coating composition z is not particularly limited, and examples thereof include an air spray method, an airless spray method, an electrostatic coating method, a roll coater method, a flow coater method, a spin coating method, and a dipping method. A dipping method is preferable from the viewpoint of productivity.
When the dipping method is employed as the application method, usually, the film thickness of the portion previously pulled up from the dipping tank (coating composition tank) becomes thin, and the film thickness of the portion pulled up from the dipping tank last becomes thick. Therefore, when the second application is performed after the first application, it is preferable to perform dipping by rotating the substrate in the vertical direction thereof by 180 degrees with respect to the substrate in the first application. This makes it easy to obtain a spectacle lens including an antifogging layer (Z) having a uniform film thickness.
Subsequently, it is preferable to perform drying and curing at 20 to 160°C for 10 to 140 minutes, and preferably at 60 to 130°C for 20 to 150 minutes. The temperature and time for drying and curing may be appropriately adjusted in consideration of the type of solvent, the heat resistance of the lens substrate, and the like.
In addition, if necessary, after the functional layer (hard coat layer, primer layer, antireflection layer, and the like) described above is provided on the lens substrate, the antifogging layer (Z) may be provided on the functional layer, or after the antifogging layer (Z) is provided on the lens substrate, the functional layer may be provided on the antifogging layer (Z).
In the present disclosure, as for the examples of components, contents, and physical properties, matters exemplified or described as a preferable range in the detailed description of the invention may be combined with each other arbitrarily.
In addition, by adjusting the composition described in Examples so as to be the composition described in the detailed description of the invention, the invention can be performed in a similar manner to Examples in the entire claimed composition range.

Examples

Next, the present disclosure will be described in more detail by way of Examples, but the present disclosure is not limited in any way by these Examples.

[Measurement and evaluation]

For the coating compositions for the antifogging layer (Z) and the spectacle lenses obtained in the following Examples and Comparative Examples, the following items were measured and evaluated. The measurement and evaluation results are shown in Table 1.

<Hydroxyl value>

The hydroxyl value was measured and calculated according to the method specified in "7.1 Neutralization titration method" of JIS K 0070: 1992 "Test methods for acid value, saponification value, ester value, iodine value, hydroxyl value and unsaponifiable matter of chemical products".
The value of the acid value used for calculating the hydroxyl value was measured and calculated according to the method specified in "3.1 Neutralization titration method" of the JIS standard described above.

<Number average molecular weight (Mn), mass average molecular weight (Mw), polydispersity index (Mw/Mn)>

The number average molecular weight, mass average molecular weight, and polydispersity index were measured and calculated by gel permeation chromatography (GPC). The apparatus, conditions, and the like used are as follows.

· Equipment used: HLC-8220GPC (manufactured by Tosoh Corporation)
Column used: TSKgel SuperHZM-M, TSKgel GMHXL-H, TSKgel G2500HXL, TSKgel G5000HXL (manufactured by Tosoh Corporation)
· Column temperature: 40°C
Standard substance: TSKgel standard polystyrene A1000, A2500, A5000, F1, F2, F4, F10 (manufactured by Tosoh Corporation)
· Detector: RI (refractive index) detector
· Eluent: tetrahydrofuran
· Flow rate: 1 ml/min

<Measurement of film thickness of intermediate layer (Y) and antifogging layer (Z)>

The film thickness of the antifogging layer (Z) of the obtained spectacle lens was measured with a micro-spectrometer "USPM-RU" manufactured by Olympus Corporation.

<Measurement of indentation hardness>

The indentation hardness of the intermediate layer (Y) was measured from the surface of the colored substrate on which the intermediate layer (Y) has been formed before formation of the antifogging layer (Z) at an indentation load of 100 mgf using a nanoindentation tester "ENT-2100" (manufactured by ELIONIX Inc.).
The indentation hardness of the antifogging layer (Z) was measured in the same manner as in the measurement of the indentation hardness of the intermediate layer (Y) from the surface of the colored substrate in which the antifogging layer (Z) has been formed on the intermediate layer (Y).
The indentation hardness was measured at any seven points on the intermediate layer (Y) in the intermediate layer (Y), and at any seven points on the antifogging layer (Z) in the antifogging layer (Z), and each average value thereof was taken as the indentation hardness.
From the values obtained by the indentation hardness measurement, the difference (IY - IZ) between the indentation hardness IY (the average value of the measured values at any 7 points) of the intermediate layer (Y) at a load of 100 mgf and the indentation hardness IZ (the average value of the measured values at any 7 points) of the antifogging layer (Z) at a load of 100 mgf, and the ratio (IY/IZ) of the indentation hardness IY to the indentation hardness IZ were calculated.

<Decolorization evaluation>

The luminous transmittance (I) of each of the colored spectacle lenses obtained in Examples and Comparative Examples was measured. Next, the colored spectacle lens whose luminous transmittance was measured was immersed in water at 40°C for 30 minutes, and then the luminous transmittance (II) of the spectacle lens after immersion was measured again. The luminous transmittance was measured using a spectrophotometer "U-4100" (measurement wavelength: 380 to 780 nm, manufactured by Hitachi High-Tech Corporation).
The obtained luminous transmittance (I), the luminous transmittance (II), and the difference thereof (luminous transmittance (II) - luminous transmittance (I)) are shown in Table 1. A smaller difference between the luminous transmittance (I) and the luminous transmittance (II) indicates that the decolorization is suppressed.

<Evaluation of interference fringes>

The spectral reflectance of the colored spectacle lens was measured at a light wavelength of 380 to 780 nm using a spectrophotometer "U-4100" (manufactured by Hitachi High-Tech Corporation), and interference fringes were confirmed from the result.

[Preparation of composition for intermediate layer (Y)]

(Preparation of composition y-1)

A mixture of 3.47 mass% of an aqueous polyurethane resin composition "EVAFANOL HA50C" (manufactured by Nikka Chemical Co., Ltd.), 22.77 mass% of water, 72.25 mass% of ethanol, and 0.05 mass% of a leveling agent "Y-7006" (manufactured by Dow Corning Toray Co., Ltd.) was prepared to obtain a composition y-1.

(Preparation of composition y-2)

To 100 parts by mass of γ-glycidoxypropyltrimethoxysilane, 1.4 parts by mass of hydrochloric acid (concentration: 0.01 mol/L) and 23 parts by mass of water were added with stirring, and the mixture was stirred for 24 hours to obtain a hydrolyzate of γ-glycidoxypropyltrimethoxysilane. Next, 200 parts by mass of a composite fine particle sol mainly composed of titanium oxide, zirconium oxide, and silicon oxide, 100 parts by mass of ethyl cellosolve, 0.5 parts by mass of a silicone-based surfactant, and 3.0 parts by mass of aluminum acetylacetonate were mixed, added to the above-described hydrolyzate of γ-glycidoxypropyltrimethoxysilane, sufficiently stirred, and then filtered to obtain a composition y-2.

(Preparation of composition y-3)

To 100 parts by mass of γ-glycidoxypropyltrimethoxysilane, 31 parts by mass of hydrochloric acid (concentration: 0.1 mol/L) was added with stirring, and the mixture was stirred for 3.5 hours to obtain a hydrolyzate of γ-glycidoxypropyltrimethoxysilane. To 100 parts by mass of the hydrolyzate of γ-glycidoxypropyltrimethoxysilane, 1.1 parts by mass of polyether-modified silicone oil, 1.1 parts by mass of "OPTOLAKE 1120Z 8RU-25 A17 P1" (manufactured by JGC Catalysts and Chemicals Ltd.), 9.7 parts by mass of "DENACOL EX-421" (manufactured by Nagase ChemteX Corporation), 1.1 parts by mass of aluminum acetylacetonate, 0.4 parts by mass of iron acetylacetonate, 0.4 parts by mass of manganese acetylacetonate, and 0.5 parts by mass of "ANTAGE Crystal" (Kawaguchi Chemical Industry Co., Ltd.) were added, and the mixture was sufficiently stirred and then filtered to obtain a composition y-3.

[Preparation of coating composition for water-absorbent antifogging layer (Z)]

(Synthesis of (meth)acrylic resin A)

Into a 500 ml-flask equipped with a stirrer, a thermometer, a condenser, and a nitrogen gas inlet tube, 150 parts by mass of propylene glycol monomethyl acetate (PGMAC) was charged, and the temperature was raised to 110°C.

Separately, 25 parts by mass of dimethylacrylamide (DMAA), 35 parts by mass of polycaprolactone-modified hydroxyethyl acrylate (PLACCEL FA2D, manufactured by Daicel Corporation), 10 parts by mass of 2-hydroxylethyl methacrylate (HEMA), 5 parts by mass of polydimethylsiloxane modified with methacrylate at one terminal (Silaplane FM-0721, manufactured by JNC Corporation, molecular weight: 5,000), 25 parts by mass of methyl methacrylate, and 1 part by mass of 1,1'-azobis(cyclohexane-1-carbonitrile) (V-40, manufactured by Wako Pure Chemical Industries, Ltd.) were mixed. The mixed monomer was added dropwise to the 500 ml-flask over 2 hours with stirring, and reacted for 5 hours.

The heating was stopped and the mixture was cooled to room temperature to obtain a resin solution containing a (meth)acrylic resin (solid content ratio: 40 mass%).

The obtained (meth)acrylic resin had a hydroxyl value of 57 mgKOH/g, a number average molecular weight (Mn) of 12,000, a mass average molecular weight (Mw) of 44,000, and a polydispersity index (Mw/Mn) of 3.67. The glass transition temperature (Tg) of the (meth)acrylic resin calculated from the blending ratio of the used monomers based on the above Fox's equation was 32.8°C.

(Preparation of coating composition 1)

The (meth)acrylic resin obtained above, polycaprolactone diol (PLACCEL 205U, manufactured by Daicel Corporation, molecular weight: 530, hydroxyl value: 207 to 217 mgKOH/g), a polyfunctional isocyanate compound (24A-100, manufactured by Asahi Kasei Corporation, biuret type hexamethylene diisocyanate, isocyanate group content: 23.5 mass%, solid content: 100 mass%), propylene glycol monomethyl ether acetate, diacetone alcohol, methyl ethyl ketone, t-butanol, and ethyl acetate were mixed to obtain a mixture. The respective contents of components in the obtained mixture are as follows.

(Meth)acrylic resin: 14.7 mass%
Polycaprolactone diol: 4.4 mass%
Polyfunctional isocyanate compound: 3.4 mass%
Propylene glycol monomethyl ether acetate: 28.5 mass%
Diacetone alcohol: 18.5 mass%
Methyl ethyl ketone: 13.5 mass%

t-Butanol: 8.5 mass%
Ethyl acetate: 8.5 mass%

Then, ethyl acetate, methyl ethyl ketone, and diacetone alcohol were added and mixed with the mixture to adjust the viscosity to 35.0 mPa · s and the solid content to 22.5 mass%, thereby preparing a coating composition 1.

The amount of the (meth)acrylic resin does not represent the amount as a resin solution (solid content: mass%), but represents the amount of the resin (solid content) contained in the resin solution. The amount of the polyfunctional isocyanate compound also represents the amount as a solid content.

The measured value of the hydroxyl value of the mixture when the (meth)acrylic resin and the polyol compound were uniformly mixed in the above amounts was 93 mgKOH/g.

(Preparation of coating composition 2)

A coating composition 2 was obtained by the same operation as in the preparation of the coating composition 1 except that the coating composition 2 was prepared using ethyl acetate, methyl ethyl ketone, and diacetone alcohol so that the viscosity was 24.5 mPa · s and the solid content was 18.5 mass%.

(Preparation of coating composition 3)

A coating composition 3 was obtained by the same operation as in the preparation of the coating composition 1 except that the coating composition 3 was prepared using ethyl acetate, methyl ethyl ketone, and diacetone alcohol so that the viscosity was 18.0 mPa · s and the solid content was 16.5 mass%.

(Preparation of coating composition 4)

A coating composition 4 was obtained by the same operation as in the preparation of the coating composition 1 except that the coating composition 4 was prepared using ethyl acetate, methyl ethyl ketone, and diacetone alcohol so that the viscosity was 34.7 mPa · s and the solid content was 22.5 mass%.

[Example 1]

One liter of pure water in a beaker was kept at 95°C using an indirect bath while being stirred with a stirrer. Then, to the pure water being kept warm in the beaker, 5 mL of cinnamyl alcohol as a dyeing carrier, 5 mL of 2-ethylhexyl sodium sulfate (40 mass% aqueous solution) "Sintrex EH-R" (manufactured by NOF Corporation) as a surfactant, and 1.5 mL of polyoxyethylene stearylphenol ether sulfonate (35 mass% aqueous solution) "Neonol 20" (manufactured by Seiken Chemical Industrial Co., Ltd.) were added. Then, 2.80 g of a blue dye "FSP Blue AUL-S" (anthraquinone-based disperse dye manufactured by Futaba Sangyo Co., Ltd.) as a disperse dye, 0.35 g of a red dye "FSP Red E-A" (anthraquinone-based disperse dye manufactured by Futaba Sangyo Co., Ltd.), 0.22 g of a yellow dye "FSP Yellow FL" (manufactured by Futaba Sangyo Co., Ltd.), and 0.75 g of a brown dye "FSP Red S-N" (manufactured by Futaba Sangyo Co., Ltd.) were added so as to dye the substrate in a grayish color. Then, the aqueous solution in the beaker was stirred for 60 minutes or more using a stirrer, and each additive was uniformly dispersed and dissolved to prepare a dyeing solution. Incidentally, during preparation of the dyeing solution, the dyeing solution was kept warm such that the liquid temperature thereof was kept constant at 95°C all the time.

A thiourethane-based plastic lens substrate "EYNOA" (manufactured by HOYA Corporation, refractive index: 1.67, power: S-0.00D) was immersed in the dyeing solution at 95°C for 600 seconds to perform dyeing.

Next, the obtained colored substrate was pretreated with an aqueous alkali solution. Subsequently, the coating composition y-1 was applied to the pretreated colored substrate by a dipping method (pulling speed: 20 cm/min), then heated at a temperature of 100°C for 30 minutes, and allowed to cool to obtain a colored substrate having an intermediate layer (Y). The optical film thickness of the intermediate layer (Y) in light having a wavelength $\lambda$ of 450 to 650 nm was 0.2 $\lambda$ to 0.3 $\lambda$.

Next, the coating composition 1 was applied to the colored substrate having an intermediate layer (Y) by a dipping method (pulling speed: 5 mm/sec), then heated at a temperature of 100°C for 20 minutes, and then allowed to cool.

Thereafter, heating was performed at 120°C for 120 minutes to produce a colored spectacle lens having an antifogging layer (Z) on the colored substrate. The evaluation results of the obtained colored spectacle lens are shown in Table 1, and the measurement result of the spectral reflectance is shown in Fig. 1.

[Example 2]

A colored substrate was obtained by the same operation as in Example 1, using a thiourethane-based plastic lens substrate "EYNOA" (manufactured by HOYA Corporation, refractive index: 1.67, power: S-0.00D).

Next, the obtained colored substrate was pretreated with an aqueous alkali solution. Subsequently, the coating composition y-2 was applied to the pretreated colored substrate by a dipping method (pulling speed: 5 mm/sec), then heated at a temperature of 80°C for 30 minutes, allowed to cool, and then heated at 110°C for 60 minutes to obtain a colored substrate having an intermediate layer (Y) .

Next, the coating composition 2 was applied to the colored substrate having an intermediate layer (Y) by a dipping method (pulling speed: 5 mm/sec), then heated at a temperature of 100°C for 20 minutes, and then allowed to cool.

Thereafter, heating was performed at 120°C for 120 minutes to produce a colored spectacle lens having an antifogging layer (Z) on the colored substrate.

[Example 3]

A colored substrate was obtained by the same operation as in Example 1, using a thiourethane-based plastic lens substrate "EYNOA" (manufactured by HOYA Corporation, refractive index: 1.67, power: S-0.00D).

Next, the obtained colored substrate was pretreated with an aqueous alkali solution. Subsequently, the coating composition y-3 was applied to the pretreated colored substrate by a dipping method (pulling speed: 5 mm/sec), then heated at a temperature of 80°C for 30 minutes, allowed to cool, and then heated at 110°C for 60 minutes to obtain a colored substrate having an intermediate layer (Y) .

Next, the coating composition 4 was applied to the colored substrate having an intermediate layer (Y) by a dipping method (pulling speed: 5 mm/sec), then heated at a temperature of 100°C for 20 minutes, and then allowed to cool.

Thereafter, heating was performed at 120°C for 120 minutes to produce a colored spectacle lens having an antifogging layer (Z) on the colored substrate.

[Comparative Example 1]

A colored spectacle lens was produced by the same operation as in Example 1 except that the intermediate layer (Y) was not formed and the coating composition 3 was used instead of the coating composition 1. The evaluation results of the obtained colored spectacle lens are shown in Table 1, and the measurement result of the spectral reflectance is shown in Fig. 2.

[Table 1]

Table 1

| | Intermediate layer (Y) | | | Antifogging layer (Z) | | | Decolorization evaluation | | | IY-IZ*3 [mgf/μm2] | IY-IZ*4 [mgf/μm2] |
|---|---|---|---|---|---|---|---|---|---|---|---|
| | Type | Film thickness [μm] | Hardness IY*1 [mgf/μm2] | Type | Film thickness [μm] | Hardness IZ*1 [mgf/μm2] | luminous transmittance [%] | | | | |
| | | | | | | | (I) | (II) | (ID-(I) *2 | | |
| Example 1 | y-1 | 0.085 | - | Coating composition 1 | 10.2 | 13.2 | 27.6 | 28.2 | 0.6 | - | - |
| Example 2 | y-2 | 3.500 | 17.3 | Coating composition 2 | 6.4 | 13.2 | 28.7 | 29.0 | 0.3 | 4.1 | 1.31 |
| Example 3 | y-3 | 3.126 | 16.4 | Coating composition 4 | 10.5 | 14.3 | 53.2 | 53.3 | 0.1 | 2.1 | 1.15 |
| Comparative Example 1 | - | - | - | Coating composition 3 | 5.0 | 13.2 | 27.4 | 28.7 | 1.3 | - | - |

*1: represents indentation hardness.

*2: represents a difference between a luminous transmittance (I) and a luminous transmittance (II) (luminous transmittance (II) - luminous transmittance (I)).

*3: represents a difference between an indentation hardness IY of the intermediate layer (Y) at a load of 100 mgf and an indentation hardness IZ of the antifogging layer (Z) at a load of 100 mgf.

*4: represents a ratio of the indentation hardness IY of the intermediate layer (Y) at a load of 100 mgf to the indentation hardness IZ of the antifogging layer (Z) at a load of 100 mgf.

The results described in Table 1 of Examples and Comparative Examples reveal that the decolorization of the colored spectacle lenses according to Examples is suppressed.

Further, Figs. 1 and 2 show that the amplitude of the ripple of the colored spectacle lens (Example 1) in which the intermediate layer (Y) having an optical film thickness of 0.2 $\lambda$ to 0.3 $\lambda$ in light having a wavelength $\lambda$ of 450 to 650 nm is formed is greatly reduced as compared with the amplitude of the ripple of the colored spectacle lens (Comparative Example 1) having no intermediate layer (Y). The above results demonstrate that in the colored spectacle lens in which the intermediate layer (Y) having an optical film thickness of 0.2 $\lambda$ to 0.3 $\lambda$ in light having a wavelength $\lambda$ of 450 to 650 nm is formed, decolorization is suppressed and interference fringes are also suppressed.

Finally, the embodiment of the present disclosure will be summarized.

The colored spectacle lens according to an embodiment of the present disclosure includes:

a substrate (X) containing a colorant; a water-absorbent antifogging layer (Z) present on at least one surface side of the substrate (X); and
an intermediate layer (Y) between the substrate (X) and the water-absorbent antifogging layer (Z).

According to the above-described embodiment, there is provided a spectacle lens in which migration of a colorant from a substrate to a water-absorbent antifogging layer is suppressed, and separation of the colorant from the colored spectacle lens is suppressed. That is, there is provided a colored spectacle lens having a water-absorbent antifogging layer in which decolorization is suppressed.

Each embodiment disclosed herein is an example in every respect and should not be restrictively understood. The scope of the present disclosure is defined not by the above description but by claims, and intends to include all modifications within meaning and a scope equal to claims.

In the present disclosure, as for the examples of components, contents, and physical properties, matters exemplified or described as a preferable range in the detailed description of the invention may be combined with each other arbitrarily.

In addition, by adjusting the composition described in Examples so as to be the composition described in the detailed description of the invention, the embodiment in the present disclosure can be performed in a similar manner to Examples in the entire claimed composition range.

## Claims

1. A colored spectacle lens comprising:

    a substrate (X) containing a colorant; a water-absorbent antifogging layer (Z) present on at least one surface side of the substrate (X); and
    an intermediate layer (Y) between the substrate (X) and the water-absorbent antifogging layer (Z).

2. The spectacle lens according to claim 1, wherein a difference (IY - IZ) between an indentation hardness IY of the intermediate layer (Y) at a load of 100 mgf and an indentation hardness IZ of the water-absorbent antifogging layer (Z) at a load of 100 mgf is more than 0 mgf/$\mu m^2$.

3. The spectacle lens according to claim 1 or 2, wherein a ratio (IY/IZ) of the indentation hardness IY to the indentation hardness IZ is 1.1 or more.

4. The colored spectacle lens according to any one of claims 1 to 3, wherein the substrate (X) and the intermediate layer (Y) are in direct contact with each other.

5. The colored spectacle lens according to any one of claims 1 to 4, wherein the intermediate layer (Y) and the water-absorbent antifogging layer (Z) are in direct contact with each other.

6. The colored spectacle lens according to any one of claims 1 to 5, wherein an optical film thickness of the intermediate layer (Y) in light having a wavelength of 450 to 650 nm is 0.2 $\lambda$ to 0.3 $\lambda$.

7. The colored spectacle lens according to any one of claims 1 to 6, wherein the intermediate layer (Y) is a cured product of a composition containing a thermosetting resin.

8. The colored spectacle lens according to any one of claims 1 to 7, wherein the water-absorbent antifogging layer (Z)

is a cured product of an antifogging layer composition containing the following components (A) to (D):

Component (A): a (meth)acrylic resin having a constituent unit derived from a monomer (a-1) represented by the following general formula (1), a constituent unit derived from a monomer (a-2) represented by the following general formula (2), a constituent unit derived from a hydroxyalkyl (meth)acrylate (a-3), and a constituent unit derived from a monomer (a-4) represented by the following general formula (3);
Component (B): a polyol compound (B); and
Component (C): a polyfunctional isocyanate compound (C),

[Chemical Formula 1]

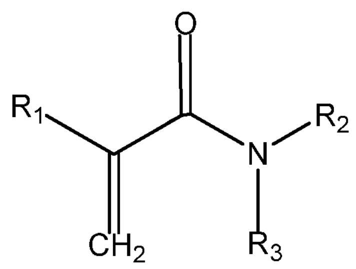

(1)

wherein $R_1$ is a hydrogen atom or a methyl group, and $R_2$ and $R_3$ are each independently a hydrogen atom or a linear or branched alkyl group having 1 to 3 carbon atoms,

[Chemical Formula 2]

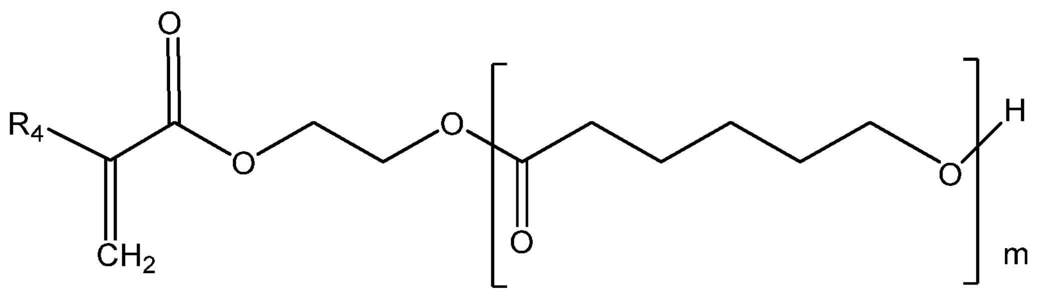

(2)

wherein $R_4$ is a hydrogen atom or a methyl group, and m is an integer of 1 to 5, and

[Chemical Formula 3]

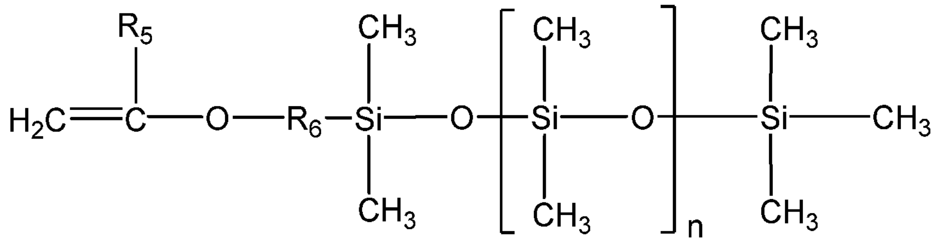

(3)

wherein $R_5$ is a hydrogen atom or a methyl group, $R_6$ is a divalent organic group, and n is 0 or an integer of 1 or more.

9. The spectacle lens according to any one of claims 1 to 8, wherein the water-absorbent antifogging layer (Z) is an outermost layer.

FIG. 1

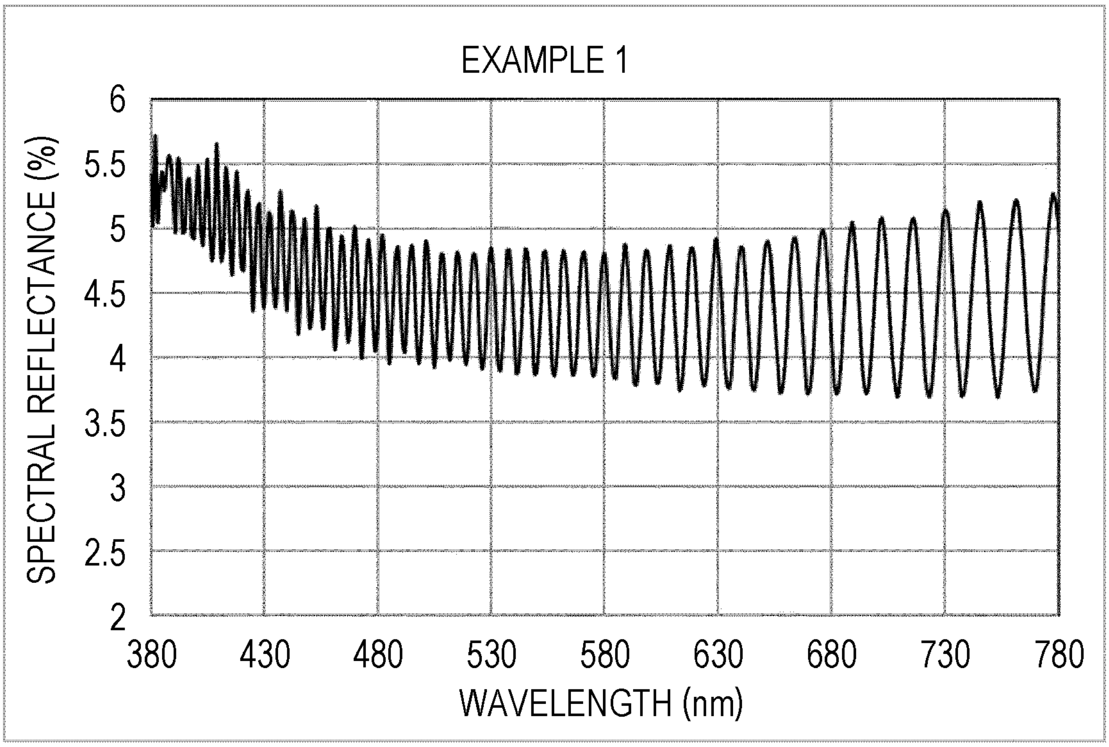
EXAMPLE 1
SPECTRAL REFLECTANCE (%)
6
5.5
5
4.5
4
3.5
3
2.5
2
380
430
480
530
580
630
680
730
780
WAVELENGTH (nm)

FIG. 2

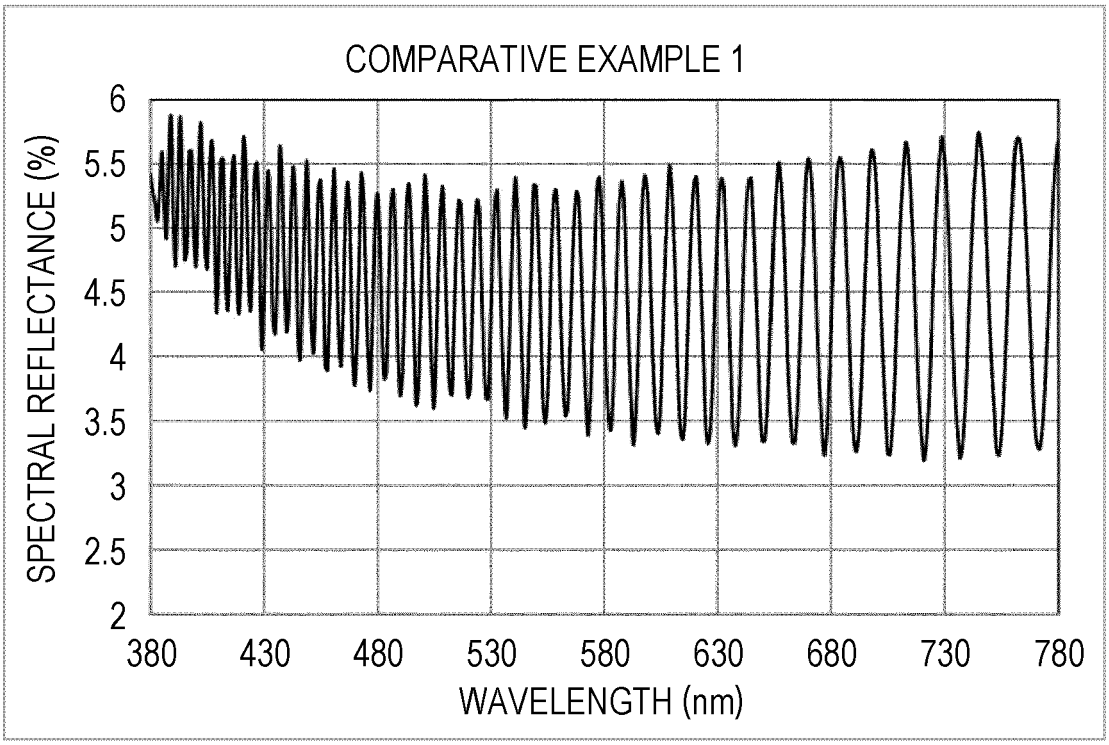
COMPARATIVE EXAMPLE 1
SPECTRAL REFLECTANCE (%)
6
5.5
5
4.5
4
3.5
3
2.5
2
380
430
480
530
580
630
680
730
780
WAVELENGTH (nm)

## INTERNATIONAL SEARCH REPORT

International application No.
**PCT/JP2022/016499**

**A. CLASSIFICATION OF SUBJECT MATTER**

***G02C 7/10***(2006.01)i; ***G02B 1/10***(2015.01)i; ***G02B 5/22***(2006.01)i; ***G02C 7/02***(2006.01)i
FI: G02C7/10; G02B1/10; G02B5/22; G02C7/02

According to International Patent Classification (IPC) or to both national classification and IPC

**B. FIELDS SEARCHED**

Minimum documentation searched (classification system followed by classification symbols)

G02C7/10; G02B1/10; G02B5/22; G02C7/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | WO 2018/105593 A1 (MITSUI CHEMICALS INC.) 14 June 2018 (2018-06-14)<br>paragraphs [0017], [0066], [0067], [0078]-[0088], fig. 5 | 1-7, 9<br>1-9 |
| Y | JP 56-149016 A (SUWA SEIKOSHA K.K.) 18 November 1981 (1981-11-18)<br>column 1, examples 1-3 | 1-9 |
| Y | JP 2015-148673 A (NIKON-ESSILOR CO., LTD.) 20 August 2015 (2015-08-20)<br>paragraphs [0050], [0058], [0059], examples | 1-9 |
| Y | JP 2019-94468 A (NATOCO CO., LTD.) 20 June 2019 (2019-06-20)<br>abstract, claims, paragraph [0087] | 1-9 |
| A | JP 2010-256895 A (HOYA CORP.) 11 November 2010 (2010-11-11)<br>entire text, all drawings | 1-9 |
| A | JP 2011-186292 A (HOYA CORP.) 22 September 2011 (2011-09-22)<br>entire text, all drawings | 1-9 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 June 2022** | **21 June 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/016499**

| Patent document cited in search report | Publication date (day/month/year) | Patent family member(s) | Publication date (day/month/year) |
|---|---|---|---|
| WO 2018/105593 A1 | 14 June 2018 | (Family: none) | |
| JP 56-149016 A | 18 November 1981 | (Family: none) | |
| JP 2015-148673 A | 20 August 2015 | (Family: none) | |
| JP 2019-94468 A | 20 June 2019 | JP 6340539 B1 | |
| JP 2010-256895 A | 11 November 2010 | (Family: none) | |
| JP 2011-186292 A | 22 September 2011 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2013005710 A
- JP 3588375 B
- JP H0834897 A
- JP H1192653 A
- JP H1192655 A